# FASCICULE DE BREVET EUROPEEN

(11) **EP 4 507 853 B1**
(45) Date de publication et mention de la délivrance du brevet: **30.09.2026**
(21) Numéro de dépôt: 23722619.6
(22) Date de dépôt: 07.04.2023
(51) Int. Cl.: B25J 9/00, B25J 15/06, B25J 19/00, B25J 15/00

(54) **CAISSON D'ASPIRATION APTE À ÊTRE DÉSASSEMBLÉ POUR UN PRÉHENSEUR**
ZERLEGBARER SAUGKASTEN FÜR GREIFER
DISASSEMBLABLE SUCTION BOX FOR A GRIPPER

(30) Priorité: 15.04.2022 FR 2203538
(43) Date de publication de la demande: 19.02.2025
(73) Titulaire: Defitech, 73410 Entrelacs (FR)
(72) Inventeur: BOUVAIS, Vincent, 73410 ENTRELACS (FR)
(74) Mandataire: Germain Maureau
(86) Numéro de dépôt international: PCT/FR2023/050514
(87) Numéro de publication internationale: WO 2023/198983

(56) Documents cités:
- EP-B1- 1 586 419
- WO-A1-2013/074943
- WO-A1-2021/070076
- FR-A1- 2 182 787
- FR-A1- 3 112 980
- JP-A- H11 254 365
- US-A1- 2014 008 929
- US-A1- 2016 346 938
- US-A1- 2021 354 314
- US-B1- 10 913 165

## Description

### Domaine technique de l'invention

Le domaine technique de l'invention concerne la préhension par aspiration aussi appelée préhension par le vide, en particulier l'invention est relative à un caisson d'aspiration pour un préhenseur.

### Etat de la technique antérieure

Il est connu d'utiliser un dispositif de manutention comprenant un organe mobile et un préhenseur monté sur l'organe mobile. L'organe mobile est, par exemple, un vérin de levage, un tube de levage, un palan, un bras articulé ou un portique de levage. Le préhenseur peut saisir un ou des objets qui peuvent ensuite être déplacés par actionnement de l'organe mobile.

Le préhenseur peut saisir au moins un objet en utilisant une technique de préhension par le vide. À cet effet, le préhenseur peut comprendre un caisson d'aspiration couplé à un dispositif de génération de vide, aussi appelé générateur de vide. Le générateur de vide a pour fonction de créer une dépression permettant d'évacuer l'air présent dans le caisson d'aspiration en vue d'assurer la préhension d'un ou de plusieurs objets à l'aide d'un ou de plusieurs organes de contact fixés sur le caisson aspiration. L'organe de contact où chaque organe de contact est agencé pour coopérer avec moins un orifice d'aspiration du caisson aspiration de sorte à maintenir par aspiration l'objet à saisir par rapport au préhenseur. Ainsi, cet organe de contact ou chaque organe de contact peut venir au contact de l'objet à saisir, puis une aspiration est générée, notamment grâce au générateur de vide, de telle sorte que l'objet saisi par le préhenseur est maintenu par rapport au préhenseur même lors de mouvements de l'organe mobile. L'organe de contact visé ci-dessus peut être une mousse ou une ventouse.

De manière générale, il cherché à limiter le poids du préhenseur. Une diminution du poids du préhenseur permet d'augmenter la charge utile du dispositif de manutention, c'est-à-dire le poids que peut porter le dispositif de manutention. En diminuant le poids du préhenseur, il est possible d'utiliser, pour un poids défini d'objets à saisir successivement par le dispositif de manutention, un dispositif de manutention moins puissant et coûteux en composants. À cet effet, il est connu un caisson aspiration comprenant une première plaque, une entretoise et une deuxième plaque, l'entretoise séparant les première et deuxième plaques. Les première et deuxième plaques sont chacune en aluminium en inox ou en acier ou en matériaux composites comprenant des fibres de carbone, l'entretoise est en polyuréthane ou en mousse PVC (sigle de « polyvinyl chloride » en langue anglaise et correspondant à poly(chlorure de vinyle)) dure de sorte à s'opposer à son écrasement lors de la préhension d'objet(s). La première plaque, l'entretoise et la deuxième plaque sont fixées entre elles par vis ou rivets.

Il est utile que le caisson d'aspiration puisse être démontable afin de permettre son nettoyage lorsque ce dernier est encrassé. En effet, lors de la préhension d'objet(s) par le vide, des particules/poussières peuvent être aspirées par le caisson d'aspiration et celle-ci peuvent venir encrasser ce dernier d'où il peut résulter la dégradation de sa fonction participant à la saisie d'objet(s). Bien que le caisson d'aspiration évoqué ci-dessus à base de plaques séparées par une entretoise et assemblé par vis puisse être démontable, il reste néanmoins qu'il n'est pas optimisé pour augmenter la résistance mécanique du caisson d'aspiration dans sa configuration assemblée où l'entretoise et les première et deuxième plaques sont assemblées de manière démontable entre elles.

Le document EP 1 586 419 B1 décrit un caisson d'aspiration démontable.

### Objet de l'invention

L'invention a pour but un caisson démontable présentant notamment une résistance mécanique adaptée.

A cet effet, l'invention est relative à un caisson d'aspiration pour un préhenseur, ledit caisson d'aspiration comprenant une première partie et une deuxième partie, l'une des première et deuxième parties étant destinée à être couplée à au moins un organe de contact du préhenseur, ledit organe de contact étant destiné à venir au contact d'au moins un objet à saisir par le préhenseur, et l'autre des première et deuxième parties étant destinée à être en communication fluidique avec un générateur de vide par exemple du préhenseur, le caisson d'aspiration étant configuré pour adopter sélectivement :
- une configuration assemblée dans laquelle un lien mécanique est établi entre les première et deuxième parties de sorte à délimiter respectivement une première paroi du caisson d'aspiration et une deuxième paroi du caisson d'aspiration opposée à la première paroi, chacune des première et deuxième parois délimitant en partie, dans la configuration assemblée, une cavité d'aspiration du caisson d'aspiration ;
- une configuration désassemblée dans laquelle ledit lien mécanique est supprimé ;
le caisson d'aspiration étant tel que :
- la première partie délimite, dans la configuration assemblée et dans la configuration désassemblée, un renfoncement ;
- le renfoncement participe à délimiter, dans la configuration assemblée, la cavité d'aspiration du caisson d'aspiration ;
- le caisson d'aspiration comprend un joint d'étanchéité interposé, dans la configuration assemblée, entre les première et deuxième parties ;
- la première partie est formée par deux pièces collées l'une à l'autre de sorte à délimiter le renfoncement.

Deux pièces collées formant ainsi la première partie est une solution permettant à la première partie de se comporter comme un bloc rigide présentant une résistance mécanique satisfaisante. En outre, cela permet de choisir lors de la fabrication les deux pièces selon une épaisseur adaptée en vue de les coller pour obtenir une rigidité souhaitée de la première partie.

Ce caisson d'aspiration présente l'avantage d'être démontable afin d'en permettre le nettoyage en cas d'encrassement, il s'inscrit donc dans une volonté de chercher à limiter les déchets puisqu'il peut être nettoyé en cas de perte d'efficacité du préhenseur qui le comprend liée à un encrassement du caisson d'aspiration. Après son nettoyage, le caisson d'aspiration peut être utilisé à nouveau, évitant ainsi son remplacement. L'intégration du renfoncement à la première partie permet de conférer une rigidité à cette première partie tendant à s'opposer à un écrasement du caisson d'aspiration lors de son utilisation.

Le caisson de préhension peut comprendre en outre une ou plusieurs des caractéristiques suivantes. Les caractéristiques qui suivent correspondent donc à des réalisations particulières pouvant venir en complément de ce qui a été décrit ci-dessus dans le cadre du caisson d'aspiration.

Selon une caractéristique, la deuxième partie est une plaque, notamment d'épaisseur sensiblement constante.

Ainsi, la deuxième partie se présentant sous la forme d'une plaque permet de limiter le poids global du caisson d'aspiration.

Selon une caractéristique, la deuxième partie délimite un renfoncement participant à délimiter, avec le renfoncement délimité par la première partie, la cavité d'aspiration du caisson d'aspiration dans la configuration assemblée.

Ainsi, le renfoncement de la deuxième partie permet de conférer une rigidité à cette deuxième partie tendant à s'opposer à un écrasement du caisson d'aspiration lors de son utilisation.

Selon une caractéristique, la deuxième partie est une pièce monolithique, par exemple obtenue par usinage d'une plaque,
Le fait que la deuxième partie soit obtenue par usinage peut être déterminé par analyse de cette deuxième partie. L'usinage présente différents avantages comme permettre d'adapter la forme de la cavité d'aspiration à la demande et/ou de garantir une cohésion mécanique au sein de la deuxième partie qui ne comprend alors pas d'assemblage par fixation, par exemple par collage, de différentes pièces.

Selon une caractéristique, la deuxième partie est formée par deux pièces collées l'une à l'autre de sorte à former le renfoncement de la deuxième partie.

Deux pièces collées formant ainsi la deuxième partie est une solution permettant à la deuxième partie de se comporter comme un bloc rigide présentant une résistance mécanique satisfaisante. En outre, cela permet de choisir lors de la fabrication les deux pièces selon une épaisseur adaptée en vue de les coller pour obtenir une rigidité souhaitée de la deuxième partie.

Selon une caractéristique, la première partie comprend un matériau composite comprenant une matrice et des fibres, et/ou la deuxième partie comprend un matériau composite comprenant une matrice et des fibres.

Le matériau composite, que cela soit celui de la première partie ou celui de la deuxième partie, présente l'avantage d'offrir une bonne résistance mécanique tout en permettant de limiter, le cas échéant, le poids de la première partie et/ou de la deuxième partie. En ce sens, le poids du caisson d'aspiration peut être limité, ce qui est avantageux dans le fonctionnement d'un bras articulé équipé d'un préhenseur comprenant ce caisson d'aspiration pour réaliser la préhension d'objet(s).

Selon une caractéristique, le caisson d'aspiration comprend un pare-chocs s'étendant, dans la configuration assemblée, le long d'un bord latéral de la première partie et d'un bord latéral de la deuxième partie, ledit pare-chocs comprenant un cordon comprimé, dans la configuration assemblée, entre les première et deuxième parties.

Ainsi, le pare-chocs permet de former une protection pour amortir les chocs que pourrait subir le caisson d'aspiration lors de sa manipulation par exemple via un bras articulé. Le cordon présente l'avantage de faciliter l'assemblage du pare-chocs au reste du caisson d'aspiration. Le pare-chocs présente aussi l'avantage dans le domaine de la protection des personnes lorsque le caisson d'aspiration est utilisé dans le cadre de la cobotique où les impacts sont normés pour la protection des personnes.

Selon une caractéristique, le joint d'étanchéité est formé par le cordon.

Ainsi, puisque le pare-chocs participe aussi à la fonction d'étanchéité du caisson d'aspiration, cela permet de limiter le nombre d'éléments à manipuler lors de l'assemblage et du désassemblage du caisson d'aspiration.

Selon une caractéristique, le caisson d'aspiration comprend des organes d'assemblage comprenant chacun une partie mâle comprenant une tête d'appui et une partie femelle comprenant une tête d'appui, et, dans la configuration assemblée et pour chaque organe d'assemblage, la partie mâle dudit organe d'assemblage est engagée dans la partie femelle dudit organe d'assemblage de sorte que la tête d'appui de la partie mâle dudit organe d'assemblage et la tête d'appui de la partie femelle dudit organe d'assemblage participent à la mise en œuvre d'une sollicitation de la première partie et de la deuxième partie l'une en direction de l'autre.

Ainsi les organes d'assemblage permettent d'assurer un maintien adapté des première et deuxième parties entre elles tout en permettant une compression adaptée du joint d'étanchéité.

Selon une caractéristique, le caisson d'aspiration comprend une troisième partie agencée, dans la configuration assemblée, entre la première partie et la deuxième partie et, dans la configuration assemblée :
- le joint d'étanchéité est comprimé entre la troisième partie et la deuxième partie ;
- le caisson d'aspiration comprend un joint d'étanchéité additionnel comprimé entre la troisième partie et la première partie.

Ainsi, la troisième partie permet d'augmenter le volume de la cavité d'aspiration en ajustant la distance de séparation entre les première et deuxième parois selon l'épaisseur du caisson d'aspiration. La porosité d'un objet à saisir est un paramètre qui peut nécessiter d'augmenter le volume de la cavité d'aspiration afin de réaliser une préhension satisfaisante de l'objet. Ainsi, en permettant la présence d'une telle troisième partie, il est possible de conférer au caisson d'aspiration une bonne modularité. Par ailleurs, un telle troisième partie peut être ajoutée au cours de la durée de vie du caisson d'aspiration pour prolonger afin de l'ajuster à sa destination d'utilisation, bien entendu au détriment du poids et de la vitesse de préhension.

Selon une caractéristique, la première partie comprend au moins une nervure qui participe à la délimitation du renfoncement de la première partie.

Ainsi, une ou plusieurs nervures servent de renfort pour s'opposer à l'écrasement du caisson d'aspiration selon son épaisseur mesurée selon une direction transversale à des faces opposées, sensiblement parallèles, du caisson d'aspiration respectivement délimitées par une surface de la première partie orientée vers l'extérieur du caisson d'aspiration et par une surface de la deuxième partie orientée vers l'extérieur du caisson d'aspiration.

L'invention est aussi relative à un préhenseur comprenant :
- au moins un caisson d'aspiration tel que décrit ;
- au moins un organe de contact destiné à venir au contact d'au moins un objet à saisir par le préhenseur ;
ledit organe de contact étant couplé à l'une des première ou deuxième parties dudit caisson d'aspiration.

Ainsi, la maintenance du préhenseur peut être réalisée puisque son caisson d'aspiration est démontable.

L'organe de contact peut être une mousse ou une ventouse. Il s'agit là de deux types d'organes de contact connus permettant de saisir un ou des objets de différents types.

L'invention est aussi relative à un dispositif d'aspiration pour un préhenseur, ledit dispositif d'aspiration ayant une pluralité de chambres d'aspiration. Le dispositif d'aspiration comprend une pluralité de caissons d'aspiration tels que décrits, la cavité d'aspiration de chacun des caissons d'aspiration correspondant à l'une desdites chambres d'aspiration et le dispositif d'aspiration comprend un support d'un seul tenant délimitant localement les premières parties ou les deuxièmes parties des caissons d'aspiration.

Ainsi, ce dispositif d'aspiration présente l'avantage de permettre la saisie de différents objets en simultané chacun via l'un des caissons d'aspiration en considérant que chaque caisson d'aspiration permet alors par exemple la saisie d'un seul des objets, ou l'avantage de pallier à une faiblesse d'un des caissons d'aspiration d'au moins deux caissons d'aspiration assurant la préhension d'un même objet.

L'invention est aussi relative à un procédé de fabrication du caisson d'aspiration, le procédé comprenant une étape de formation de la première partie du caisson d'aspiration, une étape de formation de la deuxième partie du caisson d'aspiration et une étape d'assemblage pour obtenir la configuration assemblée du caisson d'aspiration, l'étape de formation de la première partie comprenant une étape d'assemblage de deux plaques dont l'une est ajourée pour participer à la formation du renfoncement.

Un tel procédé de fabrication présente l'avantage d'être aisé à mettre en œuvre tout en permettant d'obtenir un caisson d'aspiration facile à démonter notamment en vue de sa maintenance.

D'autres avantages et caractéristiques pourront ressortir de la description détaillée qui suit.

### Description sommaire des dessins

L'invention sera mieux comprise à la lecture de la description détaillée qui suit, donnée uniquement à titre d'exemple non limitatif et faite en se référant aux dessins annexés et listés ci-dessous.
La figure 1 illustre schématiquement un dispositif de manutention comprenant un bras articulé équipé d'un préhenseur pour manipuler un objet.
La figure 2 illustre schématiquement, selon une vue en perspective, un mode de réalisation d'un préhenseur selon l'invention.
La figure 3 illustre schématiquement, selon une vue en perspective, un caisson d'aspiration du préhenseur de la figure 2 selon une configuration assemblée de ce caisson d'aspiration.
La figure 4 illustre schématiquement, selon une vue en perspective, une configuration désassemblée selon d'un mode de réalisation particulier du caisson d'aspiration de la figure 3.
La figure 5 illustre schématiquement, selon un mode de réalisation particulier, une vue en coupe du caisson d'aspiration du type de la figure 3 dans sa configuration assemblée.
La figure 6 illustre la configuration désassemblée du caisson d'aspiration tel que visible en figure 5.
La figure 7 illustre schématiquement, selon un mode de réalisation particulier, une vue en coupe du caisson d'aspiration du type de la figure 3 dans sa configuration assemblée.
La figure 8 illustre la configuration désassemblée du caisson d'aspiration tel que visible en figure 7.
La figure 9 illustre schématiquement, selon un mode de réalisation particulier, une vue en coupe du caisson d'aspiration du type de la figure 3 dans sa configuration assemblée.
La figure 10 illustre la configuration désassemblée du caisson d'aspiration tel que visible en figure 9.
La figure 11 illustre schématiquement, selon un mode de réalisation particulier, une vue en coupe du caisson d'aspiration du type de la figure 3 dans sa configuration assemblée.
La figure 12 illustre la configuration désassemblée du caisson d'aspiration tel que visible en figure 10.
La figure 13 illustre schématiquement, selon un mode de réalisation particulier, une vue en coupe du caisson d'aspiration du type de la figure 3 dans sa configuration assemblée.
La figure 14 illustre la configuration désassemblée du caisson d'aspiration tel que visible en figure 13.
La figure 15 illustre schématiquement, selon un mode de réalisation particulier, une vue en coupe du caisson d'aspiration du type de la figure 3 dans sa configuration assemblée.
La figure 16 illustre la configuration désassemblée du caisson d'aspiration tel que visible en figure 15.
La figure 17 illustre schématiquement, selon une vue en perspective, un mode de réalisation particulier du caisson d'aspiration du type de la figure 3 dans sa configuration désassemblée.
La figure 18 illustre une version schématisée, selon une vue en coupe d'un mode de particulier du caisson d'aspiration du type de la figure 3 selon le principe de la figure 17.
La figure 19 illustre schématiquement un mode de réalisation particulier du caisson d'aspiration selon une vue en coupe du caisson d'aspiration du type de la figure 3.
La figure 20 illustre schématiquement un mode de réalisation particulier d'un dispositif d'aspiration à plusieurs caissons d'aspiration.
La figure 21 illustre schématiquement, selon une vue en perspective, un mode de réalisation particulier du préhenseur.
La figure 22 illustre schématiquement, selon une vue en perspective, un mode de réalisation particulier du préhenseur.
La figure 23 illustre schématiquement le préhenseur de la figure 22 selon une vue éclatée montrant notamment la configuration désassemblée du caisson d'aspiration.
La figure 24 illustre schématiquement, selon une vue en perspective, un mode de réalisation particulier du préhenseur équipé de ventouses.

Sur ces figures les mêmes références sont utilisées pour désigner les mêmes éléments ou des éléments similaires dans leur fonction. Les figures ne sont pas nécessairement réalisées à l'échelle afin de faciliter la compréhension de ces figures.

### Description détaillée

Par « sensiblement parallèle », il est entendu parallèle ou parallèle à plus ou moins 10 degrés.

Par « épaisseur sensiblement constante », il est entendu une épaisseur constante ou qui varie de plus ou moins 10% autour d'une valeur de référence de cette épaisseur.

Par « compris entre deux valeurs », il est entendu que ces deux valeurs forment les bornes d'une plage correspondante pour laquelle les deux valeurs sont incluses.

Par « étanchéité », il est notamment fait référence à une étanchéité à l'air.

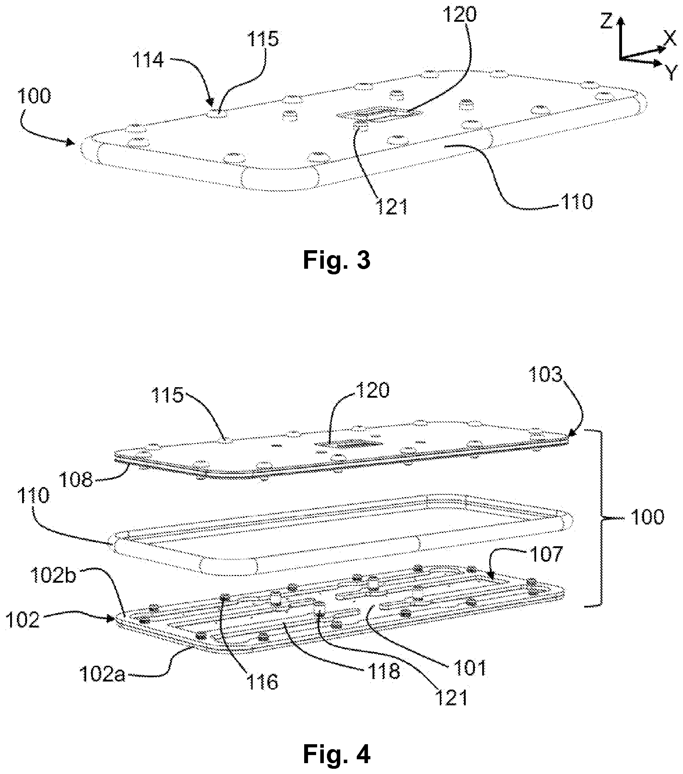

Il est défini un repère orthonormé XYZ, ce repère est représenté par les axes X, Y et Z en figure 3. La notion de dessous est définie selon l'axe Z.

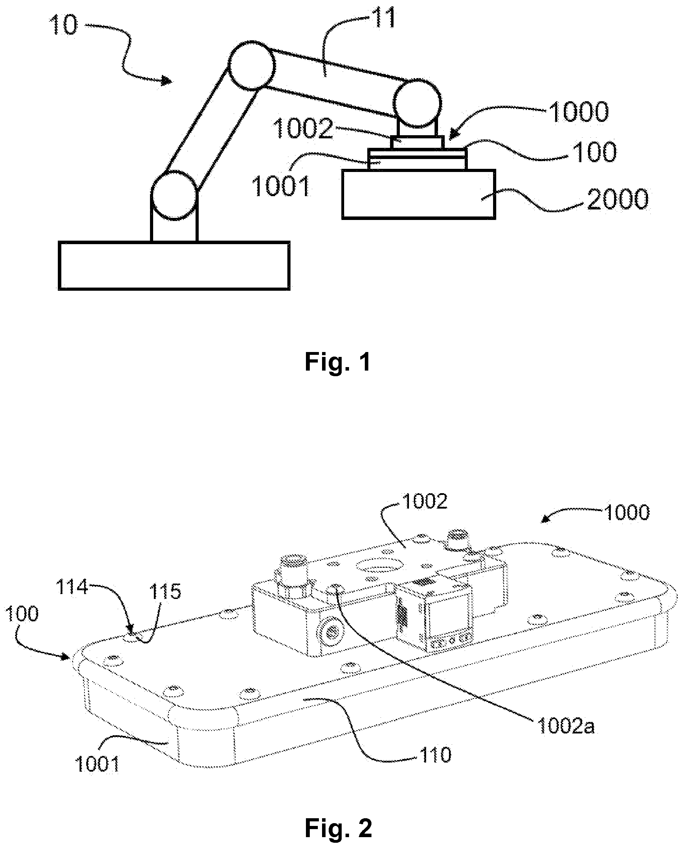

La préhension d'au moins un objet 2000, tel que par exemple visible en figure 1, par un préhenseur 1000 permet de saisir ledit au moins un objet 2000 en vue de le manipuler et/ou de le déplacer. Par la suite, ce qui s'applique à la préhension de l'objet 2000 peut s'appliquer, le cas échéant, à la préhension simultanée de plusieurs objets 2000 par le même préhenseur 1000. Pour assurer la préhension, le préhenseur 1000 peut comprendre un caisson 100 d'aspiration couplé à au moins un organe 1001 de contact appartenant au préhenseur 1000. L'organe 1001 de contact est destiné à venir au contact de l'objet 2000 à saisir par le préhenseur 1000. En outre, lors de l'utilisation du préhenseur 1000, le caisson 100 d'aspiration, et notamment son intérieur, est en communisation fluidique avec un générateur 1002 de vide (par exemple visible en figures 1, 2, 21, 22 et 23).

De manière classique, le générateur 1002 de vide peut être configuré pour aspirer l'intérieur du caisson 100 d'aspiration afin de créer une dépression permettant d'évacuer l'air présent dans le caisson 100 d'aspiration et de créer de fait une dépression au niveau d'orifices 101 (visibles notamment en figures 4 à 19 et 23) que comprend le caisson 100 d'aspiration afin d'assurer, à l'aide du ou de plusieurs organes 1001 de contact, la préhension de l'objet 2000. Ces orifices 101 sont débouchants et relient chacun l'extérieur du caisson 100 d'aspiration à l'intérieur du caisson 100 d'aspiration.

Le préhenseur 1000 peut comprendre ce générateur 1002 de vide. Dans ce cas, le générateur 1002 de vide peut être monté sur le caisson 100 d'aspiration et peut comprendre une cartouche venturi participant à assurer la fonction d'aspiration du générateur 1002 de vide.

Alternativement, le générateur 1002 de vide peut être distant du préhenseur 1000 auquel il n'appartient donc pas. Le générateur 1002 de vide est alors considéré comme déporté et peut être relié au préhenseur 1000 au moyen d'un tuyau permettant d'aspirer le contenu du caisson 100 d'aspiration. C'est alors le tuyau qui permet la communication fluidique du générateur 1002 de vide avec le caisson 100 d'aspiration lors de l'utilisation de préhenseur 1000. Dans ce cas, le générateur 1002 de vide peut comprendre une turbine ou une pompe à vide permettant d'aspirer l'air contenu dans le caisson 100 d'aspiration.

Ainsi, le caisson 100 d'aspiration peut être couplé au générateur 1002 de vide par montage direct du générateur 1002 de vide sur le caisson 100 d'aspiration ou par l'intermédiaire du tuyau reliant le caisson 100 d'aspiration au générateur 1002 de vide.

Le tuyau évoqué ci-dessus peut être remplacé par tout autre système permettant de relier le générateur 1002 de vide au caisson 100 d'aspiration.

Sur le principe de la figure 1, un dispositif 10 de manutention peut comprendre le préhenseur 1000 par exemple alors monté à un organe 11 mobile, tel qu'un bras articulé, que comprend le dispositif 10 de manutention. Dans le cas où le générateur 1002 de vide est distant du préhenseur 1000 (cas non représenté), c'est alors le dispositif 10 de manutention qui comprend le générateur 1002 de vide.

L'invention est relative au caisson 100 d'aspiration pour le préhenseur 1000 en relation avec les figures 1 à 24 qui montrent différentes réalisations du caisson 100 d'aspiration. Le caisson 100 d'aspiration comprend une première partie 102 et une deuxième partie 103. L'une de la première partie 102 et de la deuxième partie 103 est destinée à être couplée (par exemple par montage ou collage) audit au moins un organe 1001 de contact du préhenseur 1000 (par la suite, ce qui s'applique à l'organe 1001 de contact peut s'appliquer à plusieurs organes 1001 de contact que peut comprendre le préhenseur 1000), ledit organe 1001 de contact étant destiné à venir au contact dudit au moins un objet 2000 à saisir par le préhenseur 1000, et l'autre de la première partie 102 et de la deuxième partie 103 est destinée à être en communication fluidique avec le générateur 1002 de vide que le préhenseur 1000 peut comprendre ou distant du préhenseur 1000 comme évoqué ci-dessus.

Par « ladite autre de la première partie 102 et de la deuxième partie 103 est destinée à être en communication fluidique avec le générateur 1002 de vide », il est entendu ici que ladite autre de la première partie 102 et de la deuxième partie 103 est configurée pour autoriser le passage, vers le générateur 1002 de vide, d'un fluide (dans le cas présent notamment de l'air) présent à l'intérieur du caisson 100 d'aspiration. Autrement dit, ladite autre de la première partie 102 et de la deuxième partie 103 est configurée pour autoriser une communication fluidique entre l'intérieur du caisson 100 d'aspiration et le générateur 1002 de vide par exemple que cela soit par montage direct du générateur 1002 de vide sur le caisson 100 d'aspiration ou par utilisation du tuyau évoqué ci-avant reliant alors par exemple ladite autre de la première partie 102 et de la deuxième partie 103 au générateur 1002 de vide.

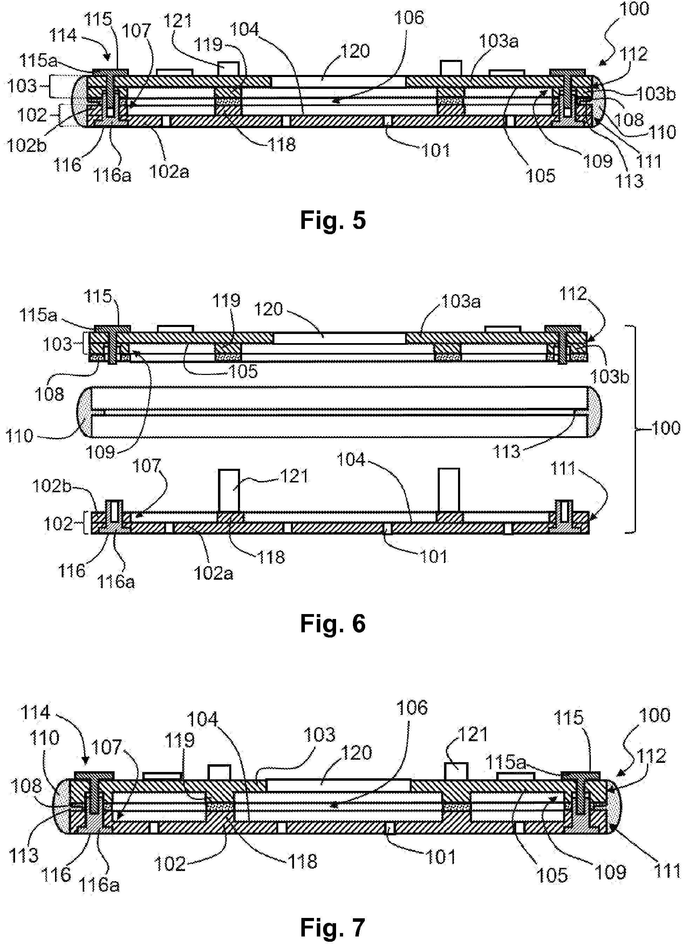

En particulier, la figure 3 montre, vue de l'extérieur, le caisson 100 d'aspiration qui peut alors présenter différents modes de réalisation structurels comme il est possible de le déduire des figures 4 à 19. Par exemple, les figures 5 à 16, 18 et 19 montrent des vues en coupe de ces différents modes de réalisation, chaque vue en coupe étant selon un plan de coupe du caisson 100 d'aspiration du type de la figure 3 parallèle au plan défini par les axes Z et Y.

Par exemple, sur les figures 4 à 11, la première partie 102 est représentée en dessous de la deuxième partie 103 et est couplée (figure 2) ou est destinée à être couplée (figures 4 à 12 et 17 à 19) à l'organe 1001 de contact ou à plusieurs organes 1001 de contact dans le sens où la première partie 102 comprend les orifices 101.

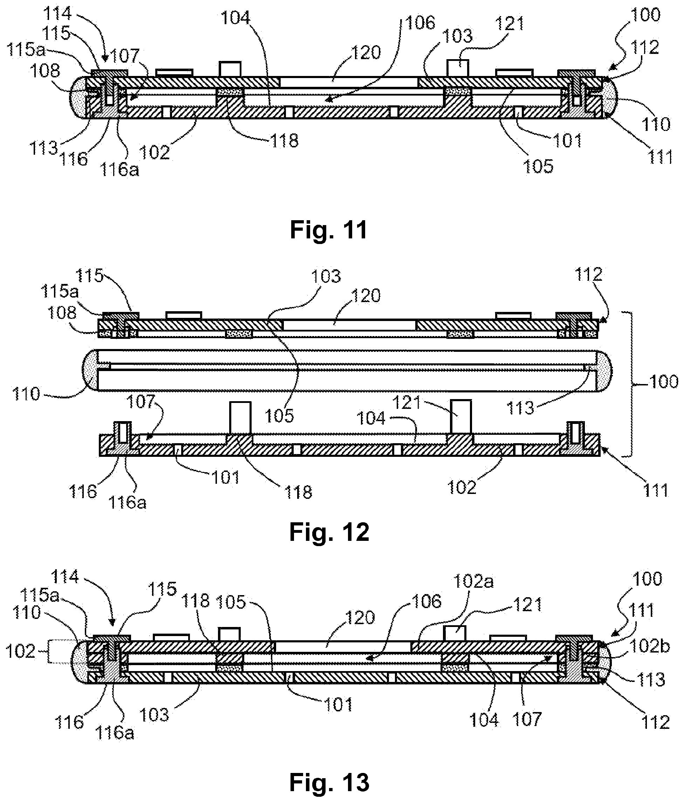

Par exemple, sur les figures 13 à 16, la deuxième partie 103 est représentée en dessous de la première partie 102 et est couplée (figure 2) ou est destinée à être couplée (figures 13 à 16) à l'organe 1001 de contact ou à plusieurs organes 1001 de contact dans le sens où la deuxième partie 103 comprend les orifices 101.

Ainsi, de manière générale ladite une des première et deuxième parties 102, 103 destinée à être couplée à l'organe 1001 de contact peut comprendre les orifices 101 permettant le passage d'air entre l'extérieur du caisson 100 d'aspiration et l'intérieur du caisson 100 d'aspiration ; en particulier ce passage d'air peut être généré lors de l'utilisation du préhenseur 1000 de manière forcée par le générateur 1002 de vide qui aspire l'intérieur du caisson 100 d'aspiration, notamment via la communication fluidique évoquée précédemment.

Le but de ce caisson 100 d'aspiration est notamment d'être démontable. A cet effet, ledit caisson 100 d'aspiration est configuré pour adopter sélectivement :
- une configuration assemblée dans laquelle un lien mécanique est établi entre la première partie 102 et la deuxième partie 103, comme cela est par exemple illustré en figures 1, 2, 3, 5, 7, 9, 11, 13, 15, 18, 20, 21 et 22, de sorte à délimiter respectivement une première paroi 104 du caisson 100 d'aspiration et une deuxième paroi 105 du caisson 100 d'aspiration opposée à la première paroi 104, chacune de la première paroi 104 et de la deuxième paroi 105 délimitant en partie, dans la configuration assemblée, une cavité 106 d'aspiration du caisson 100 d'aspiration (cette cavité 106 d'aspiration correspondant notamment à l'intérieur du caisson 100 d'aspiration évoqué précédemment) ;
- une configuration désassemblée dans laquelle ledit lien mécanique est supprimé, comme cela est par exemple illustré en figures 4, 6, 8, 10, 12, 14, 16, 17 et 23.
La première partie 102 délimite, dans la configuration assemblée et dans la configuration désassemblée, un renfoncement 107. Le renfoncement 107 participe à délimiter, dans la configuration assemblée, la cavité 106 d'aspiration du caisson 100 d'aspiration. Le caisson 100 d'aspiration comprend un joint 108 d'étanchéité interposé, dans la configuration assemblée, entre la première partie 102 et la deuxième partie 103. Bien entendu, le joint 108 d'étanchéité participe, dans la configuration assemblée, à assurer l'étanchéité de la cavité 106 d'aspiration entre la première partie 102 et la deuxième partie 103. Notamment, la première paroi 104 forme une surface interne, délimitée par la première partie 102, de la cavité 106 d'aspiration et la deuxième paroi 105 forme une surface interne, délimitée par la deuxième partie 103, de la cavité 106 d'aspiration.

Un tel caisson 100 d'aspiration présente l'avantage d'être démontable afin d'en permettre le nettoyage en cas d'encrassement, il s'inscrit donc dans une volonté de chercher à limiter les déchets puisqu'il peut être nettoyé en cas de perte d'efficacité du préhenseur 1000 liée à un encrassement du caisson 100 d'aspiration. Après son nettoyage, le caisson 100 d'aspiration peut être utilisé à nouveau, évitant ainsi son remplacement.

L'intégration du renfoncement 107 à la première partie 102 permet de conférer une rigidité à cette première partie 102 tendant à s'opposer à un écrasement du caisson 100 d'aspiration lors de son utilisation, c'est-à-dire lors de la préhension d'un objet 2000 par le préhenseur 1000 à l'aide du générateur 1002 de vide. L'apport de rigidité est assuré que le renfoncement 107 soit du côté destiné à être couplé à l'organe 1001 de contact comme dans le cas, par exemple, des figures 4 à 12, 18, 19 et 23 ou à l'opposé du côté de destiné à être couplé à l'organe 1001 de contact, le cas échéant, du côté destiné à coopérer avec générateur 1002 de vide comme le montrent les figures 13 à 16.

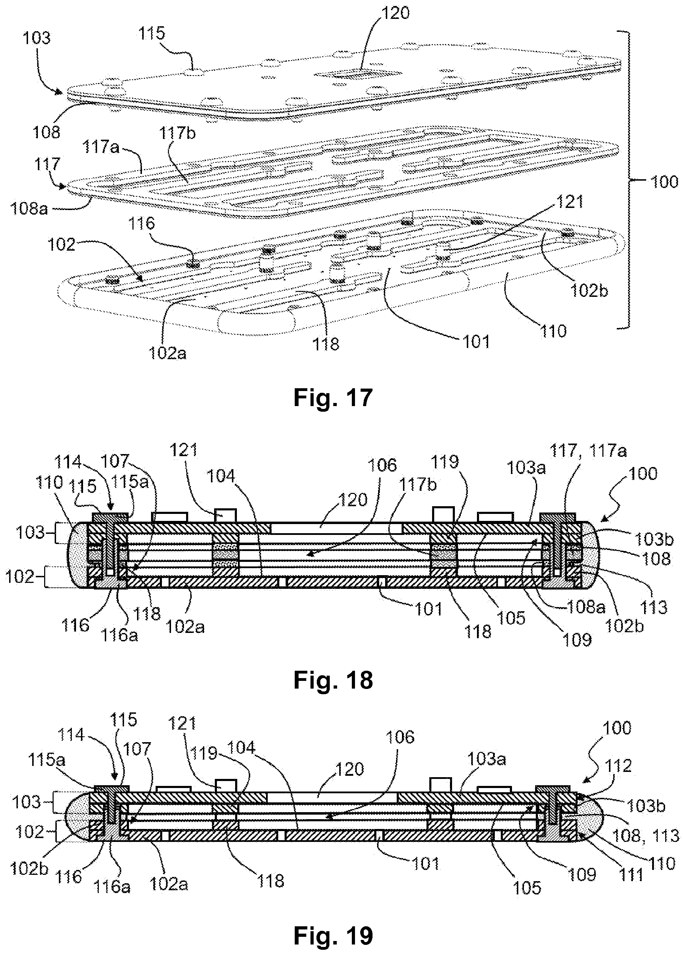

Par ailleurs, un autre avantage est, le cas échéant, que ce caisson 100 d'aspiration permet de limiter le nombre de pièces à manipuler et à aligner lors de l'assemblage du caisson 100 d'aspiration ou à manipuler lors du désassemblage du caisson 100 d'aspiration en particulier lorsque ce dernier ne comprend pas d'élément intermédiaire, ci-après correspondant à une troisième partie 117 notamment telle que visible en figures 17 et 18, indépendant participant à délimiter la structure du caisson 100 d'aspiration (et donc l'épaisseur de sa cavité 106 d'aspiration selon l'axe Z) entre les première et deuxième parties 102, 103 comme cela sera vu par la suite. Ainsi, bien que démontable le caisson 100 d'aspiration peut rester relativement fin, ce qui permet de limiter le volume de la cavité 106 d'aspiration et de conférer une vitesse de préhension satisfaisante au préhenseur 1000.

De manière générale, lors du fonctionnement du préhenseur 1000 une dépression au niveau de l'organe 1001 de contact peut être générée par le générateur 1002 de vide qui permet l'établissement d'un flux d'air traversant le caisson 100 d'aspiration en entrant dans la cavité 100 d'aspiration par les orifices 101 puis en sortant du caisson 100 d'aspiration par une ouverture 120 que comprend le caisson 100 d'aspiration, cette ouverture 120 étant ménagée dans la première ou la deuxième des parties 102, 103 opposée à ladite une des première et deuxième parties 102, 103 destinée à être couplée à l'organe 1001 de contact comprenant les orifices 101. Ainsi, l'ouverture 120 permet la communication fluidique évoquée ci-avant. L'ouverture 120 est donc configurée pour/destinée à participer à l'établissement de la communication fluidique entre la cavité 106 d'aspiration et le générateur 1002 de vide.

Le cas échéant, afin de faciliter le montage du générateur 1002 de vide sur le caisson 100 d'aspiration et de le coupler à l'ouverture 120 du caisson 100 d'aspiration, le caisson 100 d'aspiration peut comprendre des moyens 121 d'assemblage comme des inserts à corps creux taraudés pour la réception chacun d'une vis 1002a participant à une fixation du générateur 1002 de vide au caisson 100 d'aspiration. Sur les figures 3, 4, 17 et 23 il est possible de visualiser quatre moyens 121 d'assemblage autour de l'ouverture 120 pour le caisson 100 correspondant. En particulier, les moyens 121 s'étendent au travers du caisson 100 d'aspiration.

Dans la configuration assemblée, un bord périphérique latéral est au moins en partie délimité par les première et deuxième parties 102, 103. Autrement dit, les première et deuxième parties 102, 103 participent à délimiter le bord périphérique latéral.

Le joint 108 d'étanchéité permet de participer à l'étanchéité du caisson 100 d'aspiration plus particulièrement au niveau du bord périphérique latéral. Autrement dit, le joint 108 d'étanchéité permet d'éviter les pertes de charges, notamment en air, latéralement au caisson 100 d'aspiration lors du fonctionnement du préhenseur 1000, c'est-à-dire lorsque le générateur de vide 1002 est actif pour générer une aspiration via le caisson 100 d'aspiration en vue de saisir un objet 2000.

Le joint 108 d'étanchéité peut être en EPDM (ce sigle étant bien connu pour désigner l' éthylène-propylène-diène monomère) ou en silicone et le joint 108 d'étanchéité peut par exemple se présenter sous la forme d'une mousse. Ceci est tout particulièrement adapté pour assurer la fonction d'étanchéité recherchée.

Le joint 108 d'étanchéité peut adopter au moins en partie une forme de boucle fermée, destinée à assurer l'étanchéité recherchée du caisson 100 d'aspiration, et donc de sa cavité 106 d'aspiration, au niveau du bord périphérique latéral formé lorsque le caisson 100 d'aspiration est dans sa configuration assemblée.

Par exemple, le joint 108 d'étanchéité peut être, dans la configuration assemblée, comprimé entre la première partie 102 et la deuxième partie 103. Le joint 108 d'étanchéité peut alors être en contact, d'une part, avec la première partie 102 et, d'autre part, avec la deuxième partie 103.

Le joint 108 d'étanchéité peut être fixé, par exemple par collage avec un adhésif adapté tel qu'un adhésif double face, à l'une des première et deuxième parties 102, 103 (bien que cela ne soit pas limitatif, dans les exemples illustrés, le joint 108 d'étanchéité est notamment collé à la première partie 102 en figures 13 à 16, et est notamment collé à la deuxième partie 103 en figures 4 à 12 et 17) ; il en résulte que, dans la configuration désassemblée, le joint 108 d'étanchéité reste solidaire de ladite une des première et deuxième parties 102, 103 à laquelle il est fixé. Ceci présente l'avantage de limiter le nombre de pièces à manipuler lors de phase d'assemblage et/ou de désassemblage du caisson 100 d'aspiration.

En particulier, lorsque le joint 108 d'étanchéité est collé/fixé par collage à l'une des première et deuxième parties 102, 103, ce joint 108 d'étanchéité peut être, dans la configuration assemblée, en simple contact avec l'autre des première et deuxième parties 102, 103 d'où il résulte que dans la configuration désassemblée le joint 108 d'étanchéité reste fixé par collage à l'une des première et deuxième parties 102, 103 et distant de l'autre des première et deuxième parties 102, 103. Ceci correspond notamment à ce qui est illustré en figures 5 à 16.

Il résulte de ce qui a été décrit précédemment que la présence du renfoncement 107 de la première partie 102 permet de conférer une résistance mécanique satisfaisante au caisson 100 d'aspiration tout en permettant de participer à délimiter latéralement la cavité 106 d'aspiration du caisson 100 d'aspiration. Dès lors, il existe différents moyens de permettre la présence de ce renfoncement 107 :
- selon un moyen ne faisant pas partie de l'invention revendiquée, la première partie 102 peut être une pièce monolithique (se présentant par exemple sous la forme d'une plaque d'épaisseur variable) comme par exemple illustré en figure 7, 8, 11, 12, 15, 16, à cet effet, la première partie 102 peut être obtenue par usinage d'une plaque ce qui est aisément observable par l'homme du métier ;
- selon le moyen revendiqué, la première partie 102 est formée par deux pièces 102a, 102b collées l'une à l'autre de sorte à délimiter le renfoncement 107 comme par exemple illustré en figures 4, 5, 6, 9, 10, 13, 14, 17, 18, 19.
Les deux pièces 102a, 102b collées l'une à l'autre peuvent l'être par d'une colle bi-composant époxy. L'homme du métier pourra utiliser des colles bi-composant époxy bien connues en soi comme par exemple de la LOCTITE^{®} EA 9461 ou de l'ARALDITE^{®} 2015-1.

L'usinage évoqué de la plaque à partir de laquelle peut être issue la première partie 102 peut être réalisé à l'aide d'une fraise.

La première partie 102 formée par deux pièces 102a, 102b peut être obtenue par collage l'une à l'autre d'une première plaque avec une deuxième plaque (formant alors respectivement les deux pièces 102a, 102b) découpée de manière adaptée par exemple à l'aide d'une fraise pour en retirer des parties de sorte que le découpage de la deuxième plaque permette, avec la coopération de la première plaque, l'obtention du renfoncement 107 suite au collage.

De manière générale, le renfoncement 107 de la première partie 102 peut résulter du fait que la périphérie de la face de la première partie 102 délimitant la première paroi 104 présente une élévation en forme de boucle obtenue par fraisage de la plaque ou par l'une des deux pièces 102a, 102b. Cette élévation participe avec la première paroi 104 à délimiter, dans la configuration assemblée, la cavité 106 d'aspiration.

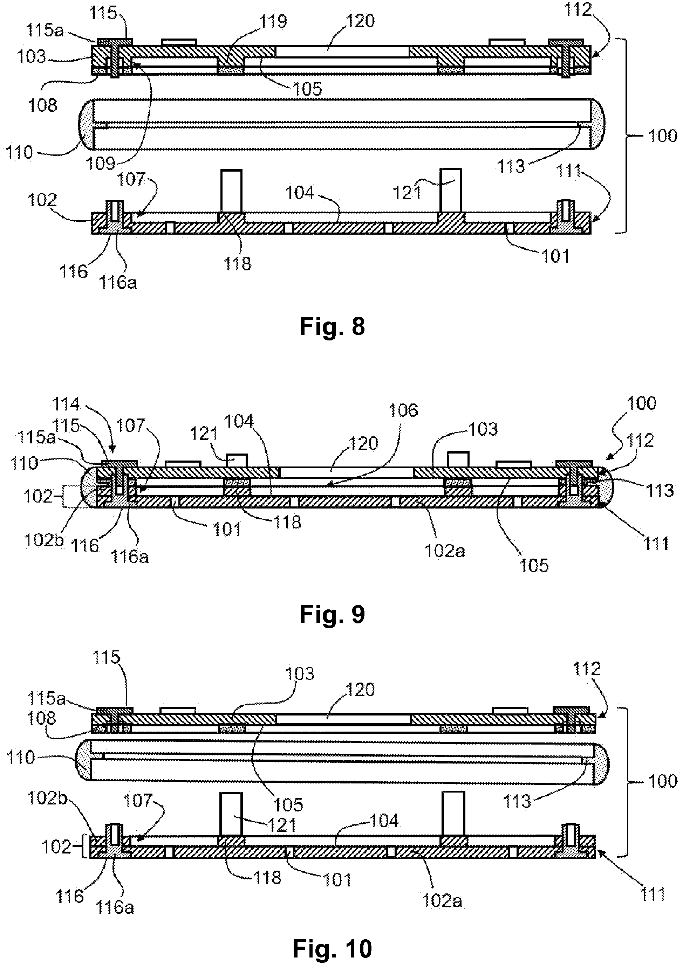

La deuxième partie 103 peut être une plaque comme cela est par exemple visible en figures 9 à 16. Cette plaque qui forme alors la deuxième partie 103 présente préférentiellement une épaisseur sensiblement constante.

Selon une réalisation, la deuxième partie 103 peut délimiter un renfoncement 109 participant à délimiter, avec le renfoncement 107 délimité par la première partie 102, la cavité 106 d'aspiration du caisson 100 d'aspiration dans la configuration assemblée comme cela est par exemple visible en figures 5, 6, 7, 8, 18 et 19.

La deuxième partie 103 peut être une pièce monolithique (se présentant par exemple sous la forme d'une plaque d'épaisseur variable) comme le montrent par exemple les figures 7 et 8, et peut par exemple obtenue par usinage d'une plaque. Alternativement, la deuxième partie 103 peut être formée par deux pièces 103a, 103b (figures 5, 6, 18 et 19) collées l'une à l'autre de sorte à former le renfoncement 109 de la deuxième partie 103.

Les deux pièces 103a, 103b de la deuxième partie 103 peuvent être collées l'une à l'autre par une colle bi-composant époxy. L'homme du métier pourra utiliser des colles bi-composant époxy bien connues en soi comme par exemple de la LOCTITE^{®} EA 9461 ou de l'ARALDITE^{®} 2015-1.

L'usinage évoqué de la plaque à partir de laquelle peut être issue la deuxième partie 103 peut être réalisé à l'aide d'une fraise.

La deuxième partie 103 formée par deux pièces 103a, 103b peut être obtenue par collage l'une à l'autre d'une première plaque avec une deuxième plaque (formant alors respectivement les deux pièces 103a, 103b) découpée de manière adaptée par exemple à l'aide d'une fraise pour en retirer des parties de sorte que le découpage de la deuxième plaque permette, avec la coopération de la première plaque, l'obtention du renfoncement 109 suite au collage.

Notamment, le collage de deux pièces, que cela soit pour former la première partie 102 ou la deuxième partie 103 sera préféré car cela sera généralement plus rapide que d'usiner une plaque complète à la forme voulue et car cela permet de limiter la perte de matière (les parties découpées peuvent être réutilisées pour d'autres applications).

L'usinage présente un avantage dans le cadre de préhenseur 1000 à caisson 100 d'aspiration de petite taille pour diminuer le temps de fabrication par rapport au collage de pièces différentes ; ceci étant bien entendu vrai que si le rapport entre le temps d'usinage d'une plaque et le temps de former deux pièces adaptées puis de les coller est strictement inférieur à 1. Un autre avantage de l'usinage est qu'il est possible de diminuer le poids global de la première partie 102, et le cas échéant de la deuxième partie 103, dans le sens où il n'y a pas besoin de prévoir des dimensionnements adaptés de surfaces de collage pour satisfaire un besoin de collage efficient entre deux pièces.

De manière générale, le renfoncement 109 de la deuxième partie 103 peut résulter du fait que la périphérie de la face de la deuxième partie 103 délimitant la deuxième paroi 105 présente une élévation en forme de boucle obtenue par fraisage ou par l'une des deux pièces 103a, 103b. Cette élévation participe avec la deuxième paroi 105 à délimiter, dans la configuration assemblée, la cavité 106 d'aspiration.

De préférence, la première partie 102 comprend un matériau composite comprenant une matrice et des fibres, notamment des fibres de carbone ou de Kevlar^{®}. Ceci présente l'avantage de renforcer la rigidité de la première partie 102.

De préférence, la deuxième partie 103 comprend un matériau composite comprenant une matrice et des fibres, notamment des fibres de carbone ou de Kevlar^{®}. Ceci présente l'avantage de renforcer la rigidité de la deuxième partie 103.

En particulier, et ce de manière applicable au matériau composite de la première partie 102 et/ou de la deuxième partie 103, la matrice peut être en résine époxy, bien entendu dans un état durci.

Le matériau composite peut être le même pour la première partie 102 et pour la deuxième partie 103, ou le matériau composite de la première partie 102 peut être différent du matériau composite de la deuxième partie 103.

Dans le cas où une pièce monolithique forme la première partie 102 ou la deuxième partie 103, cette dernière est alors préférentiellement constituée du matériau composite correspondant.

Si la première partie 102, ou la deuxième partie 103, est formée de deux pièces collées entre elles, ces deux pièces peuvent être chacune constituée par un matériau composite tel qu'évoqué précédemment.

Concernant les fibres évoquées précédemment, que cela soit pour la première partie 102 ou pour la deuxième partie 103, chaque fibre peut être choisie parmi : une fibre de carbone, une fibre de verre et une fibre d'aramide (par exemple du Kevlar^{®}). Autrement dit, au sein de chacune des première et deuxième parties 102, 103, les fibres peuvent être d'un même matériau ou en différents matériaux. De telles fibres présentent l'avantage d'assurer une rigidité satisfaisante du caisson 100 d'aspiration tout permettant de limiter son poids. Un avantage des fibres de carbone et/ou de verre et/ou d'aramide dans le matériau composite correspondant est que cette partie peut présenter une déformation avant altération plus importante que si elle était en aluminium ou en acier.

Le matériau composite peut comprendre une armure sergé 3K formée par ses fibres. Il peut notamment s'agir d'une armure de carbone sergé 3K.

Selon une réalisation particulière pouvant notamment être mise en œuvre pour tout ou partie des différentes réalisations de caisson 100 d'aspiration, et par exemple comme illustrée en figures 2 à 18, 22 et 23, le caisson 100 d'aspiration peut comprendre un pare-chocs 110 s'étendant, dans la configuration assemblée, le long d'un bord 111 latéral de la première partie 102 et d'un bord 112 latéral de la deuxième partie 103, ledit pare-chocs 110 comprenant un cordon 113 comprimé, dans la configuration assemblée, entre les première et deuxième parties 102, 103.

Le pare-chocs 110 peut être en EPDM ou silicone et le pare-chocs 110 peut par exemple se présenter sous la forme d'une mousse. L'EPDM ou le silicone présente chacun l'avantage d'avoir une souplesse satisfaisante, et de préférence encore plus de souplesse sous leur forme de mousse, pour absorber et limiter les conséquences d'un impact via le pare-chocs 110.

Le bord 111 latéral de la première partie 102 et le bord 112 latéral de la deuxième partie 103 participent chacun à délimiter le bord périphérique latéral évoqué ci-avant.

Dans la configuration assemblée, comme le montrent par exemple les figures 5, 7, 9, 11, le cordon 113 peut être pincé/comprimé entre le joint 108 d'étanchéité, notamment alors fixé à la deuxième partie 103, et la première partie 102 d'où il résulte le maintien du pare-chocs 110 par rapport au reste du caisson 100 d'aspiration.

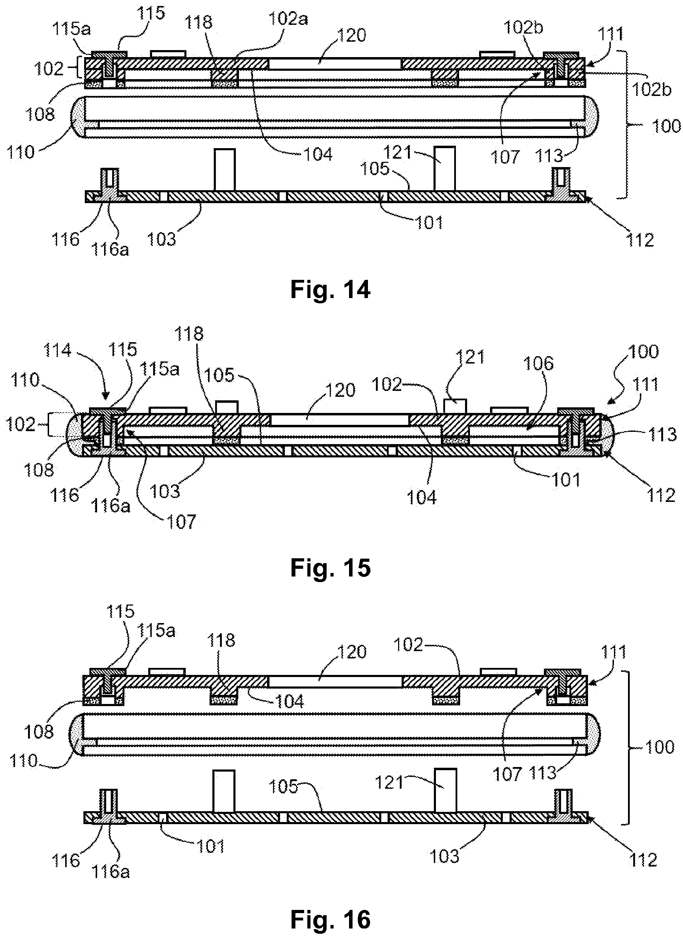

Alternativement, comme le montrent par exemple la figure 13 et la figure 15, dans la configuration assemblée, le cordon 113 peut être pincé/comprimé entre le joint 108 d'étanchéité, notamment alors fixé à la première partie 102, et la deuxième partie 103 d'où il résulte le maintien du pare-chocs 110 par rapport au reste du caisson 100 d'aspiration.

Le pare-chocs 110 peut aussi être tel que le cordon 113 forme en fait le joint 108 d'étanchéité comme le montre par exemple la figure 19. Ceci permet de limiter globalement le nombre d'éléments nécessaires pour fabriquer le caisson 100 d'aspiration. Ce principe pouvant bien entendu s'appliquer aux différentes réalisations décrites.

En alternative, le pare-chocs 110 peut être dépourvu de cordon 113 et être collé, par exemple via un adhésif double face, à l'une des première et deuxième parties 102, 103. Selon encore une autre alternative les première et/ou deuxième parties 102, 103 peuvent, dans la configuration assemblée, être telles qu'elles définissent un logement, par exemple obtenu par usinage adapté des première et/ou deuxième parties 102, 103, dans lequel est emboitée une portion du pare-chocs 110 afin de permettre un maintien du pare-chocs 110 par rapport au reste du caisson 100 d'aspiration
Il a été évoqué précédemment le lien mécanique qui permet de maintenir le caisson 100 d'aspiration dans sa configuration assemblée. En fait, par « lien mécanique », il est entendu tout lien permettant de maintenir le caisson 100 d'aspiration dans sa configuration assemblée. Le lien mécanique est réversible puisqu'il peut être supprimé pour obtenir la configuration désassemblée du caisson 100 d'aspiration. Dans la configuration assemblée, le lien mécanique peut maintenir la première partie 102 par rapport à la deuxième partie 103 de sorte à former un tout cohérent et s'opposer à un mouvement relatif entre la première partie 102 et la deuxième partie 103. La suppression du lien mécanique autorise au contraire de manipuler de manière indépendante la première partie 102 et la deuxième partie 103, par exemple en les éloignant l'une de l'autre, d'où il résulte qu'il est possible d'accéder aisément à l'intérieur du caisson 100 d'aspiration et donc à la cavité 106 d'aspiration, par exemple pour nettoyer la cavité 106 d'aspiration.

Il existe donc un besoin d'avoir un lien mécanique efficace et simple à mettre en œuvre, par exemple pour faciliter la maintenance du caisson 100 d'aspiration. A cet effet, le caisson 100 d'aspiration peut comprendre des organes 114 d'assemblage comprenant chacun une partie mâle 115 comprenant une tête 115a d'appui et une partie femelle 116 comprenant une tête 116a d' appui. Dans la configuration assemblée et pour chaque organe 114 d'assemblage, la partie mâle 115 dudit organe 114 d'assemblage est engagée dans la partie femelle 116 dudit organe 114 d'assemblage de sorte que la tête 115a d'appui de la partie mâle 115 dudit organe 114 d'assemblage et la tête 116a d'appui de la partie femelle 116 dudit organe 114 d'assemblage participent à la mise en œuvre d'une sollicitation de la première partie 102 et de la deuxième partie 103 l'une en direction de l'autre, notamment d'où il résulte que l'organe d'assemblage participe à la compression du joint 108 d'étanchéité. Outre le fait d'assurer le maintien souhaité de la première partie 102 par rapport à la deuxième partie 103, cela permet aussi de comprimer le joint 108 d'étanchéité de manière adaptée pour assurer l'étanchéité latérale (i.e. parallèlement au plan donné par les axes X et Y en figure 3) du caisson 100 d'aspiration afin d'éviter les pertes de charge au niveau du bord périphérique latéral lors de la préhension d'objet(s) 2000. En particulier, les organes 114 d'assemblage s'étendent au travers du caisson 100 d'aspiration et travers notamment la première partie 102 et la deuxième partie 103.

En particulier, la partie femelle 116 peut se présenter sous la forme d'un insert fixé à la première partie 102, ou à la deuxième partie 103, qui comprend alors aussi les orifices 101 ; dans ce cas, les parties femelles 106 affleurent préférentiellement à la surface extérieure du caisson 100 d'aspiration (i.e. les parties femelles 116 ne font pas saillies à la surface d'une face du caisson 100 d'aspiration où sera/est monté l'organe 1001 de contact pour en faciliter le montage). Dans ce cas, la tête 116a d'appui, aussi appelée collerette, de chaque partie femelle 116 peut être logée entièrement dans la première partie 102 ou la deuxième partie 103 concernée et y être collée ou non.

Par exemple, le ou chaque organe 114 d'assemblage peut être tel que sa partie femelle 116 comprend un corps allongé qui s'étend depuis la tête 116a d'appui de ladite partie 116 femelle, ce corps allongé de ladite partie femelle 116 étant pourvu d'un trou taraudé pour recevoir par vissage un corps allongé fileté de la partie mâle 115 dudit organe 114 d'assemblage, le corps allongé fileté s'étendant depuis la tête 115a d'appui de ladite partie mâle 115.

Les organes 114 d'assemblage peuvent être répartis à la périphérie du caisson 100 d'aspiration, cette périphérie étant notamment celle selon un plan parallèle aux axes X et Y de la figure 3, de sorte à permettre, dans la configuration assemblée, une compression adaptée, notamment une compression homogène, du joint 108 d'étanchéité dans le but d'éviter les fuites d'air par le bord périphérique latéral.

A titre d'exemple, la figure 3 montre l'utilisation de quatorze organes 114 d'assemblage, ceci pouvant bien entendu être adapté en fonction des dimensions du caisson 100 d'aspiration.

Selon une réalisation particulière, le caisson 100 d'aspiration peut comprendre une troisième partie 117 agencée, dans la configuration assemblée, entre la première partie 102 et la deuxième partie 103. Ainsi, dans la configuration assemblée, le joint 108 d'étanchéité peut être comprimé entre la troisième partie 117 et la deuxième partie 103 et plus particulièrement entre un bord 117a de la troisième partie 117 et la deuxième partie 103. Par ailleurs, dans la configuration assemblée, le caisson 100 d'aspiration comprend dans ce cas un joint 108a d'étanchéité additionnel comprimé entre la troisième partie 117 et la première partie 102 et plus particulièrement entre le bord 117a de la troisième partie 117 et la première partie 102. Ce joint 108 d'étanchéité additionnel participe alors lui aussi, dans la configuration assemblée, à assurer l'étanchéité de la cavité 106 d'aspiration entre la première partie 102 et la deuxième partie 103. Dans la configuration assemblée, la troisième partie 117 permet d'augmenter le volume de la cavité 106 d'aspiration par rapport au volume de cette cavité 106 d'aspiration si le caisson 100 d'aspiration était, dans sa configuration assemblée, dépourvu de la troisième partie 117. Il en résulte que le caisson 100 d'aspiration est plus épais, permettant un volume de cavité 106 d'aspiration plus conséquent autorisant une meilleur préhension d'objet(s) 2000, notamment poreux à l'air, puisqu'en augmentant le volume de la cavité 106 de préhension le préhenseur 1000 peut avoir une meilleure puissance bien que cela se fasse au détriment de la vitesse à laquelle le ou les objets 2000 peuvent être saisis (i.e. perte de réactivité du préhenseur 1000).

Ainsi, le caisson 100 d'aspiration tel que décrit présente l'avantage d'être modulaire dans le sens où la troisième partie 117 peut être ajoutée aisément au besoin pour ajuster la distance de séparation entre les première et deuxième parties 102, 103 par exemple à la manière d'une entretoise. D'ailleurs, plusieurs troisièmes parties 117 peuvent être empilées si besoin entre les première et deuxième parties 102, 103 pour permettre un meilleur ajustement du volume de la cavité 106 d'aspiration, il conviendra alors de prévoir un ou des joints d'étanchéité supplémentaires pour assurer, dans la configuration assemblée, l'étanchéité de la cavité 106 d'aspiration entre la première partie 102 et la deuxième partie 103.

Dans la configuration désassemblée, au contraire de la configuration assemblée, les première, deuxième et troisième parties 102, 103, 117 peuvent être manipulées de manière indépendantes et donc sont séparées les unes des autres.

En particulier, la troisième partie 117 peut être une plaque découpée selon son épaisseur de sorte qu'elle comprend un bord en forme de boucle participant à délimiter, dans la configuration assemblée, la cavité 106 d'aspiration et le bord périphérique latéral. Autrement dit, la troisième partie 117 peut être une plaque ajourée.

Dans le cas de la présence de la troisième partie 117, le joint 108 d'étanchéité peut être fixé, par exemple par collage notamment à l'aide d'un adhésif double face, à la deuxième partie 103 (figure 17) et notamment sur une face de la deuxième partie 103 en regard de la troisième partie 117 dans la configuration assemblée (figure 18) ; alors, dans la configuration assemblée, le joint 108 d'étanchéité est en contact avec la troisième partie 117. Bien entendu, alternativement le joint 108 d'étanchéité peut être fixé, par exemple par collage notamment à l'aide d'un adhésif double face, à la troisième partie 117 sur une face de la troisième partie 117 en regard de la deuxième partie 103 dans la configuration assemblée; alors, dans la configuration assemblée le joint 108 d'étanchéité est en contact avec la deuxième partie 103. Encore alternativement, le joint 108 d'étanchéité peut simplement être en contact avec la deuxième partie 103 et la troisième partie 117 dans la configuration assemblée ; alors, dans la configuration désassemblée, le joint 108 d'étanchéité peut être manipulé de manière indépendante par rapport aux deuxième et troisième parties 103, 117. Le joint 108a d'étanchéité additionnel peut être fixé, par exemple par collage notamment à l'aide d'un adhésif double face, à la troisième partie 117 (figure 17) et notamment sur une face de la troisième partie 117 en regard de la première partie 102 dans la configuration assemblée (figure 18) ; alors, dans la configuration assemblée, le joint 108a d'étanchéité additionnel est en contact avec la première partie 102. Bien entendu, alternativement le joint 108a d'étanchéité additionnel peut être fixé, par exemple par collage notamment à l'aide d'un adhésif double face, à la première partie 102 sur une face de la première partie 102 en regard de la troisième partie 117 dans la configuration assemblée ; alors, dans la configuration assemblée, le joint 108a d'étanchéité additionnel est en contact avec la troisième partie 117. Encore alternativement, le joint 108a d'étanchéité additionnel peut simplement être en contact avec la première partie 102 et la troisième partie 117 dans la configuration assemblée ; alors, dans la configuration désassemblée, le joint 108a d'étanchéité additionnel peut être manipulé de manière indépendante par rapport aux première et troisième parties 102, 117.

La troisième partie 117 peut comprendre un matériau composite comme décrit ci-avant. Cependant, la troisième partie 117 peut être en un autre matériau, comme par exemple une mousse compacte de sorte à s'opposer à son écrasement dans le cadre de l'utilisation du caisson 100 d'aspiration. La troisième partie 117 peut être en une résine fibrée ou peut être obtenue en impression 3D (aussi appelée fabrication additive) de tout matériau adapté à sa fonction. L'utilisation d'une mousse en tant que troisième partie 117 peut être possible si la rigidité du caisson 100 d'aspiration assurée au moins par la première partie 102 munie de son renfoncement 107 et, le cas échéant, par la deuxième partie 103, notamment munie de son renfoncement 109, est suffisante.

Le joint 108a d'étanchéité additionnel peut être en EPDM en silicone et le joint 108a d'étanchéité additionnel peut par exemple se présenter sous la forme d'une mousse. Ceci est tout particulièrement adapté pour assurer la fonction d'étanchéité recherchée.

La première partie 102 peut comprendre une ou des nervures 118 (voir par exemple les figures 4 à 19 et 23) qui participent à la délimitation du renfoncement 107 de la première partie 102 et donc à la forme de la cavité 106 d'aspiration.

La deuxième partie 103 peut comprendre une ou des nervures 119 qui participent à la délimitation du renfoncement 109 de la deuxième partie 103 et donc à la forme de la cavité 106 d'aspiration.

La ou les nervures 118, 119 évoquées ci-avant participent à améliorer la rigidité globale du caisson 100 d'aspiration en améliorant la rigidité de la première partie 102 et/ou de la deuxième partie 103.

Par la suite, il est évoqué plusieurs nervures 118 que la première partie 102 peut comprendre ; ce qui s'applique pour plusieurs nervures 118 de la première partie 102 peut aussi s'appliquer à une seule nervure 118 dans le cas où la première partie 102 ne comprend que cette seule nervure 118. Le cas échéant, il est aussi évoqué par la suite plusieurs nervures 119 que la deuxième partie 103 peut comprendre ; ce qui s'applique pour plusieurs nervures 119 de la deuxième partie 103 peut aussi s'appliquer à une seule nervure 119 dans le cas où la deuxième partie 103 ne comprend que cette seule nervure 119.

En particulier, les nervures 118, 119 s'étendent au niveau d'un fond du renfoncement 107, 109 correspondant, elles impliquent donc une diminution du volume de la cavité 106 d'aspiration dans la configuration assemblée tout en permettant d'améliorer la rigidité.

Par exemple, le joint 108 d'étanchéité peut présenter une forme telle qu'il est comprimé, dans la configuration assemblée :
- entre un bord d'une face de la première partie 102 et un bord d'une face de la deuxième partie 103, lesdits bords adoptant notamment la forme d'une boucle fermée et lesdites faces étant en regard l'une de l'autre ; et
- entre les nervures 118 de la première partie 102 et la deuxième partie 103 ;
améliorant ainsi la rigidité globale du caisson 100 d'aspiration puisque les nervures 118 et le joint 108 d'étanchéité s'opposent à l'écrasement du caisson 100 d'aspiration selon son épaisseur mesurable selon l'axe Z.

Cette compression du joint 108 d'étanchéité entre les nervures 118 de la première partie 102 et la deuxième partie 103 peut être assurée lorsque la deuxième partie 103 est en forme de plaque, notamment à épaisseur sensiblement constante par exemple comme cela est illustré en figures 9, 11, 13 et 15.

Lorsque la deuxième partie 103 comprend les nervures 119, la compression du joint 108 d'étanchéité entre les nervures 118 de la première partie 102 et la deuxième partie 103 peut se faire plus particulièrement entre les nervures 118 de la première partie 102 et les nervures 119 de la deuxième partie 103. Autrement dit, le joint 108 d'étanchéité peut présenter une forme telle qu'il est comprimé, dans la configuration assemblée :
- entre le bord de la face de la première partie 102 et le bord de la face de la deuxième partie 103, lesdits bords adoptant notamment la forme d'une boucle fermée et lesdites faces étant en regard l'une de l'autre ; et
- entre les nervures 118 de la première partie 102 et les nervures 119 de la deuxième partie 103, par exemple comme cela est illustré en figures 5 et 7;
améliorant ainsi la rigidité globale du caisson 100 d'aspiration puisque les nervures 118, 119 et le joint 108 d'étanchéité s'opposent à l'écrasement du caisson 100 d'aspiration selon son épaisseur mesurable selon l'axe Z.

Outre la fonction de renfort que confèrent les nervures 118, 119, ces dernières permettent d'affiner la première partie 102 ou la deuxième partie 103 correspondante au niveau du fond du renfoncement 107, 109 correspondant. Ainsi, par exemple lorsque la première partie 102 ou la deuxième partie 103 est formée par le collage de deux pièces, la pièce formant le fond du renfoncement 107, 106 correspondant peut être une plaque d'épaisseur relativement fine, par exemple comprise entre 0,5 mm et 5 mm.

Dans le cas où la troisième pièce 117 est présente comme le montrent les figures 17 et 18, la troisième pièce 117 peut comprendre des portions 117b, venant chacune en interposition entre une nervure 118 de la première partie 102 et la deuxième partie 103, et plus particulièrement en interposition entre une nervure 118 de la première partie 102 et une nervure 119 de la deuxième partie 103, de sorte que pour chaque portion 117b de la troisième pièce 117 :
- ladite portion 117b participe à la compression du joint 108 d'étanchéité entre la deuxième partie 103 et ladite portion 117b, et, le cas échéant, entre l'une des nervures 119 de la deuxième partie 103 et ladite portion 117b ;
- ladite portion 117b participe à la compression du joint 108a d'étanchéité additionnel entre ladite portion 117b et l'une des nervures 118 de la première partie 102.
Ceci permet de s'opposer efficacement à l'écrasement du caisson 100 d'aspiration selon son épaisseur. Notamment, les portions 117b s'étendent depuis le bord 117a de la troisième partie 117 pour participer à délimiter le volume de la cavité 106 d'aspiration dans la configuration assemblée.

L'invention est aussi relative à un dispositif 130 d'aspiration pour le préhenseur 1000, ledit dispositif 130 d'aspiration comprend une pluralité de chambres d'aspiration. Le dispositif 100 d'aspiration comprend une pluralité de caissons 100 d'aspiration tels que décrits, la cavité 106 d'aspiration de chacun des caissons 100 d'aspiration correspondant à (i.e. formant) l'une desdites chambres d'aspiration. Le dispositif 130 d'aspiration comprend un support 131 d'un seul tenant délimitant localement les premières parties 102 ou les deuxièmes parties 13 des caissons 100 d'aspiration. Ceci permet par exemple d'avoir plusieurs cavités 106 d'aspiration indépendantes, par exemple pour saisir différents objets 2000. Notamment, chaque caisson 100 d'aspiration peut alors être mis en communication fluidique avec un générateur 1002 de vide qui lui est propre (i.e. chaque générateur 1002 de vide peut alors être couplé/associé à un seul des caissons 100 d'aspiration).

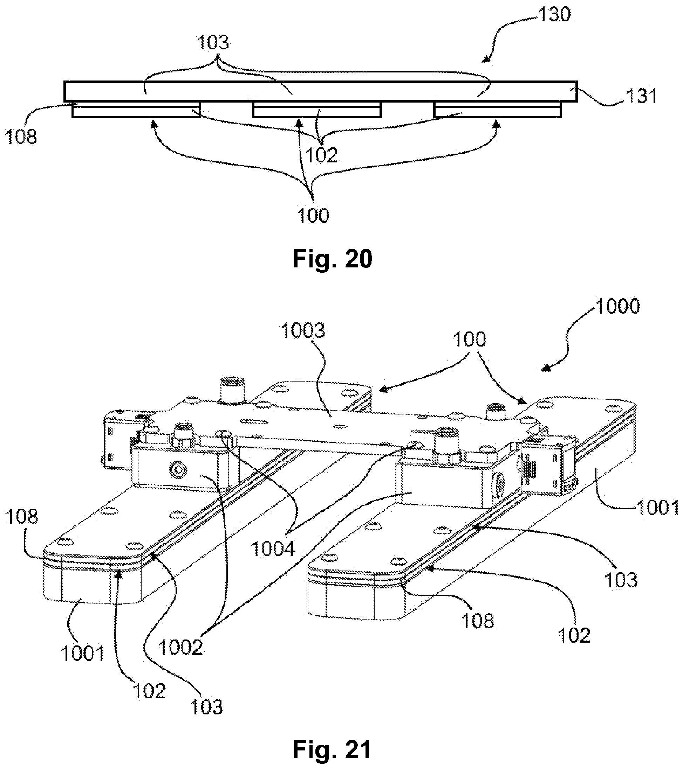

En particulier, la figure 20 représente le dispositif 130 d'aspiration pour lequel le support 131 délimite localement trois deuxièmes parties 103 chacune assemblée à une première partie 102 correspondante, les premières parties 102 pouvant être désassemblées de manière indépendante. Ceci permet, par exemple, de faciliter la maintenance en autorisant l'ouverture d'une cavité 106 d'aspiration à la fois pour la nettoyer. Le nombre de trois deuxièmes parties 103 est ici indicatif, il en faut notamment de manière plus générale au moins deux.

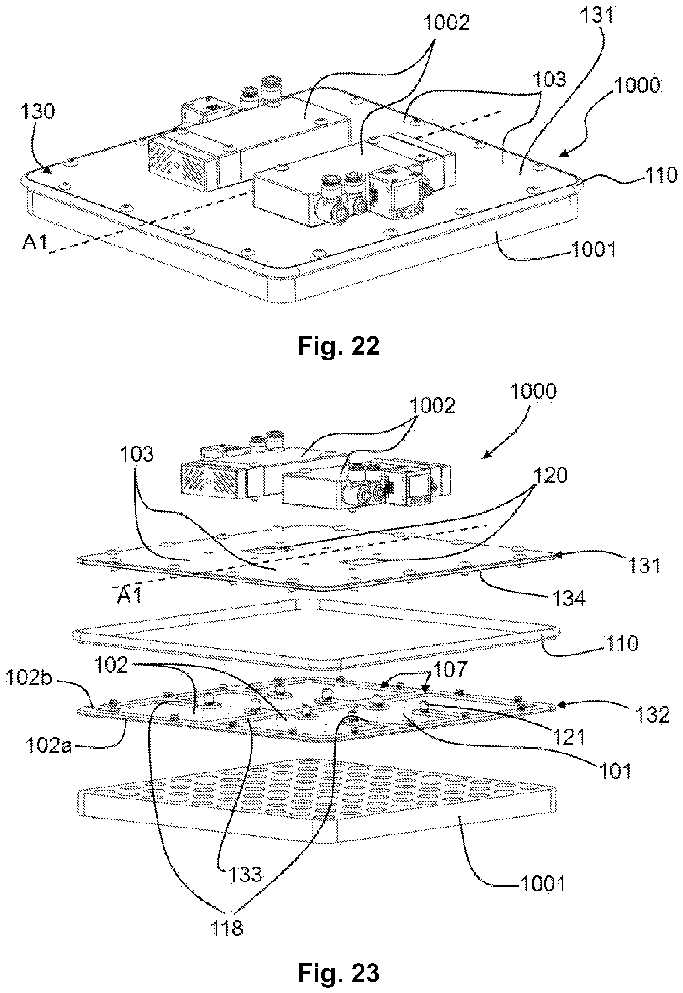

En particulier, les figures 22 et 23 illustrent un mode de réalisation particulier du dispositif 130 d'aspiration au sein d'un préhenseur 1000 d'où il résulte la présence du support 131 délimitant localement deux deuxièmes parties 103 schématiquement séparées par un trait A1 en pointillé et d'un élément 132 d'un seul tenant délimitant localement deux premières parties 102 partageant une cloison 133 commune destinée à participer à séparer deux cavités 106 d'aspiration lorsque le support 131 et l'élément 132 sont assemblés avec interposition d'un joint 134. Il en résulte que le trait A1 schématise aussi la séparation entre deux caissons 100 d'aspiration du dispositif 130 d'aspiration. Le joint 134 forme localement le joint 108 d'étanchéité de l'un des caissons 100 d'aspiration et le joint 108 d'étanchéité de l'autre des caissons 100 d'aspiration. Dans l'exemple des figures 22 et 23 l'organe 1001 de contact est une mousse commune aux deux caissons 100 d'aspiration par exemple cerclés par un même pare-chocs 110.

L'invention est aussi relative au préhenseur 1000 dont des exemples de réalisation sont illustrés en figures 1, 2, 21, 22 23. Le préhenseur 1000 comprend de manière générale :
- au moins un caisson 100 d'aspiration tel que décrit, les figures 1 et 2 montrent le préhenseur 1000 avec un seul caisson 100 d'aspiration tandis que les figures 21, 22, 23 montrent le préhenseur 1000 à deux caissons 100 d'aspiration ;
- au moins un organe 1001 de contact destiné à venir au contact d'au moins un objet 200 à saisir par le préhenseur 1000.
Ledit organe 1001 de contact est couplé/agencé, par exemple par collage ou montage, à l'une des première ou deuxième parties 102, 103 dudit caisson 100 d'aspiration. Ladite une des première ou deuxième parties 102, 103 peut comprendre au moins un orifice 101 d'aspiration, et notamment plusieurs orifices 101 d'aspiration, pour l'aspiration d'air au niveau de l'organe 1001 de contact vers la cavité 106 d'aspiration dudit caisson 100 d'aspiration.

En particulier, la figure 21 montre le préhenseur 1000 comprenant deux caissons 100 d'aspiration distincts chacun :
- couplé à un organe 1001 de contact agencé à sa première partie 102 ;
- en communication fluidique avec un générateur 1002 de vide qui lui est propre et fixé à sa deuxième partie 103.
Les deux caissons 100 d'aspiration sont solidaires l'un de l'autre à l'aide d'un élément 1003 de liaison que comprend le préhenseur 1000, cet élément 1003 de liaison (par exemple formé par une barre) étant fixé aux deux générateurs 1002 de vide, par exemple à l'aide de quatre vis 1004 pour chaque générateur 1002 de vide, ces quatre vis pouvant correspondre aux vis 1002a évoquée ci-avant, elles servent alors aussi à fixer ledit générateur 1002 de vide au caisson 100 d'aspiration correspondant.

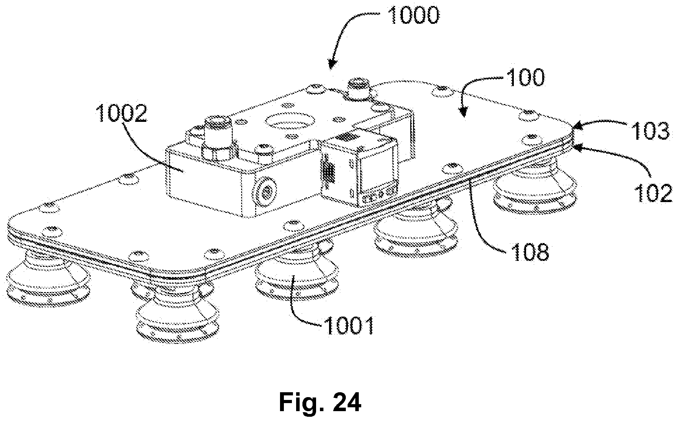

L'organe 1001 de contact peut être une mousse comme le montrent par exemple les figures 1, 2, 21, 22, 23 ou une ventouse comme le montre par exemple la figure 24 où chaque orifice 101 peut être en communication fluidique avec une ventouse correspondante.

Lorsque l'organe 1001 de contact est une mousse, cette mousse peut être fixée, par exemple par collage à l'aide d'un adhésif double face, à la première partie 102 ou à la deuxième partie 103 qui comprend alors les orifices 101 de sorte que chaque orifice 101 débouche dans un trou débouchant correspondant de la mousse, chaque trou débouchant de la mousse pouvant être : dans la continuité d'un seul orifice 101, et de dimension latérale maximale (notamment prise parallèlement au plan XY) strictement supérieure à la dimension latérale maximale (notamment prises parallèlement au plan XY) dudit orifice 101.

Il résulte de tout ce qui a été décrit ci-avant que l'invention est aussi relative à un procédé de fabrication du caisson 100 d'aspiration. Le procédé de fabrication comprend une étape de formation de la première partie 102 du caisson 100 d'aspiration, une étape de formation de la deuxième partie 103 du caisson d'aspiration et une étape d'assemblage pour obtenir la configuration assemblée du caisson 100 d'aspiration. L'étape de formation de la première partie 102 comprend une étape d'assemblage de deux plaques dont l'une est ajourée, par exemple par découpe(s) à l'aide d'une fraise, pour participer à la formation du renfoncement 107, ou, ne faisant pas partie de l'invention revendiquée, une étape d'usinage, par exemple à l'aide d'une fraise, d'une plaque pour former le renfoncement 107.

Outre les avantages communiqués ci-avant, le caisson 100 d'aspiration tel que décrit présente l'avantage de permettre de rationaliser la fabrication de ce dernier. En effet, il est alors possible de stocker les différents éléments/pièces/parties qui le compose et il n'y a plus qu'à réaliser l'assemblage à la commande : les stocks et les délais de livraison sont alors optimisés. Par ailleurs, il peut être commercialisé des kits permettant d'assembler le caisson 100 s'aspiration et éventuellement le préhenseur 1000.

Le caisson 100 d'aspiration trouve notamment une application industrielle dans le domaine de la préhension robotisée d'objet(s) 2000, en particulier dans des chaînes de production où les objets 2000 doivent être manipulés tout en permettant la maintenance aisée du caisson 100 d'aspiration.

## Revendications

1. Caisson (100) d'aspiration pour un préhenseur (1000), ledit caisson (100) d'aspiration comprenant une première partie (102) et une deuxième partie (103), l'une des première et deuxième parties (102, 103) étant destinée à être couplée à au moins un organe (1001) de contact du préhenseur (1000), ledit organe (1001) de contact étant destiné à venir au contact d'au moins un objet (2000) à saisir par le préhenseur (1000), et l'autre des première et deuxième parties (102, 103) étant destinée à être en communication fluidique avec un générateur (1002) de vide, le caisson (100) d'aspiration étant configuré pour adopter sélectivement :
• une configuration assemblée dans laquelle un lien mécanique est établi entre les première et deuxième parties (102, 103) de sorte à délimiter respectivement une première paroi (104) du caisson (100) d'aspiration et une deuxième paroi (105) du caisson (100) d'aspiration opposée à la première paroi (104), chacune des première et deuxième parois (104, 105) délimitant en partie, dans la configuration assemblée, une cavité (106) d'aspiration du caisson (100) d'aspiration ;
• une configuration désassemblée dans laquelle ledit lien mécanique est supprimé ;
caisson (100) d'aspiration dans lequel :
• la première partie (102) délimite, dans la configuration assemblée et dans la configuration désassemblée, un renfoncement (107) ;
• le renfoncement (107) participe à délimiter, dans la configuration assemblée, la cavité (106) d'aspiration du caisson (100) d'aspiration ;
• le caisson (100) d'aspiration comprend un joint (108) d'étanchéité interposé, dans la configuration assemblée, entre les première et deuxième parties (102, 103) ;
**caractérisé en ce que** la première partie (102) est formée par deux pièces (102a, 102b) collées l'une à l'autre de sorte à délimiter le renfoncement (107).

2. Caisson (100) d'aspiration selon la revendication 1, **caractérisé en ce que** la deuxième partie (103) est une plaque.

3. Caisson (100) d'aspiration selon la revendication 1, **caractérisé en ce que** la deuxième partie (103) délimite un renfoncement (109) participant à délimiter, avec le renfoncement (107) délimité par la première partie (102), la cavité (106) d'aspiration du caisson (100) d'aspiration dans la configuration assemblée.

4. Caisson (100) d'aspiration selon la revendication 3, **caractérisé en ce que** la deuxième partie (103) est une pièce monolithique, ou est formée par deux pièces (103a, 103b) collées l'une à l'autre de sorte à former le renfoncement (109) de la deuxième partie (103).

5. Caisson (100) d'aspiration selon l'une quelconque des revendications 1 à 4, **caractérisé en ce que** la première partie (102) comprend un matériau composite comprenant une matrice et des fibres, et/ou la deuxième partie (103) comprend un matériau composite comprenant une matrice et des fibres.

6. Caisson (100) d'aspiration selon l'une quelconque des revendications 1 à 5, **caractérisé en ce qu'**il comprend un pare-chocs (110) s'étendant, dans la configuration assemblée, le long d'un bord (111) latéral de la première partie (102) et d'un bord (112) latéral de la deuxième partie (103), ledit pare-chocs (110) comprenant un cordon (113) comprimé, dans la configuration assemblée, entre les première et deuxième parties (102, 103).

7. Caisson (100) d'aspiration selon la revendication 6, **caractérisé en ce que** le joint (108) d'étanchéité est formé par le cordon (113).

8. Caisson (100) d'aspiration selon l'une quelconque des revendications 1 à 7, **caractérisé en ce qu'**il comprend des organes (114) d'assemblage comprenant chacun une partie mâle (115) comprenant une tête (115a) d'appui et une partie femelle (116) comprenant une tête (116a) d'appui, et **en ce que**, dans la configuration assemblée et pour chaque organe (114) d'assemblage, la partie mâle (115) dudit organe (114) d'assemblage est engagée dans la partie femelle (116) dudit organe (114) d'assemblage de sorte que la tête (115a) d'appui de la partie mâle (115) dudit organe (114) d'assemblage et la tête (116a) d'appui de la partie (116) femelle dudit organe (114) d'assemblage participent à la mise en œuvre d'une sollicitation de la première partie (102) et de la deuxième partie (103) l'une en direction de l'autre.

9. Caisson (100) d'aspiration selon l'une quelconque des revendications 1 à 8, **caractérisé en ce qu'**il comprend une troisième partie (117) agencée, dans la configuration assemblée, entre la première partie (102) et la deuxième partie (103) et **en ce que**, dans la configuration assemblée :
• le joint (108) d'étanchéité est comprimé entre la troisième partie (117) et la deuxième partie (103) ;
• le caisson (100) d'aspiration comprend un joint (108a) d'étanchéité additionnel comprimé entre la troisième partie (117) et la première partie (102).

10. Caisson d'aspiration (100) selon l'une quelconque des revendications 1 à 9, **caractérisé en ce que** la première partie (102) comprend au moins une nervure (118) qui participe à la délimitation du renfoncement (107).

11. Dispositif (130) d'aspiration pour un préhenseur (1000), ledit dispositif (130) d'aspiration comprend une pluralité de chambres d'aspiration et une pluralité de caissons (100) d'aspiration chacun selon l'une quelconque des revendications 1 à 10, la cavité (106) d'aspiration de chacun des caissons (100) d'aspiration correspondant à l'une desdites chambres d'aspiration et le dispositif (130) d'aspiration comprend un support (131) d'un seul tenant délimitant localement les premières parties (102) ou les deuxièmes parties (103) des caissons (100) d'aspiration.

12. Préhenseur (1000), **caractérisé en ce qu'**il comprend :
• au moins un caisson (100) d'aspiration selon l'une quelconque des revendications 1 à 10 ;
• au moins un organe (1001) de contact destiné à venir au contact d'au moins un objet (2000) à saisir par le préhenseur (1000) ; ledit organe (1001) de contact étant couplé à l'une des première ou deuxième parties (102, 103) dudit caisson (100) d'aspiration.

13. Préhenseur selon la revendication 12, **caractérisé en ce que** l'organe (1001) de contact est une mousse ou une ventouse.

14. Procédé de fabrication d'un caisson (100) d'aspiration selon l'une quelconque des revendications 1 à 10, **caractérisé en ce qu'**il comprend une étape de formation de la première partie (102) du caisson (100) d'aspiration, une étape de formation de la deuxième partie (103) du caisson d'aspiration et une étape d'assemblage pour obtenir la configuration assemblée du caisson (100) d'aspiration, l'étape de formation de la première partie (102) comprenant une étape d'assemblage de deux plaques dont l'une est ajourée pour participer à la formation du renfoncement (107).

## Patentansprüche

1. Ansaugkasten (100) für einen Greifer (1000), wobei der Ansaugkasten (100) einen ersten Teil (102) und einen zweiten Teil (103) umfasst, wobei einer des ersten und des zweiten Teils (102, 103) dazu bestimmt ist, mit mindestens einem Kontaktelement (1001) des Greifers (1000) gekoppelt zu werden, wobei das Kontaktelement (1001) dazu bestimmt ist, mit mindestens einem vom Greifer (1000) zu greifenden Objekt (2000) in Kontakt zu kommen, und wobei der andere des ersten und des zweiten Teils (102, 103) dazu bestimmt ist, in Fluidverbindung mit einem Vakuumgenerator (1002) zu stehen, wobei der Ansaugkasten (100) so konfiguriert ist, dass er selektiv Folgendes annimmt:
• eine zusammengebaute Konfiguration, bei der eine mechanische Verbindung zwischen dem ersten und dem zweiten Teil (102, 103) hergestellt ist, um jeweils eine erste Wand (104) des Ansaugkastens (100) und eine der ersten Wand (104) gegenüberliegende zweite Wand (105) des Ansaugkastens (100) abzugrenzen, wobei jede der ersten und der zweiten Wand (104, 105) in der zusammengebauten Konfiguration teilweise einen Ansaughohlraum (106) des Ansaugkastens (100) begrenzt;
• eine zerlegte Konfiguration, bei der die mechanische Verbindung entfernt ist;
Ansaugkasten (100), wobei:
• der erste Teil (102) in der zusammengebauten Konfiguration und in der zerlegten Konfiguration eine Vertiefung (107) begrenzt;
• die Vertiefung (107) dazu beiträgt, in der zusammengebauten Konfiguration den Ansaughohlraum (106) des Ansaugkastens (100) abzugrenzen;
• der Ansaugkasten (100) eine Dichtung (108) umfasst, die in der zusammengebauten Konfiguration zwischen dem ersten und dem zweiten Teil (102, 103) eingefügt ist;
**dadurch gekennzeichnet, dass** der erste Teil (102) durch zwei aneinander geklebte Teile (102a, 102b) ausgebildet ist, um die Vertiefung (107) abzugrenzen.

2. Ansaugkasten (100) nach Anspruch 1, **dadurch gekennzeichnet, dass** der zweite Teil (103) eine Platte ist.

3. Ansaugkasten (100) nach Anspruch 1, **dadurch gekennzeichnet, dass** der zweite Teil (103) eine Vertiefung (109) begrenzt, die dazu beiträgt, mit der durch den ersten Teil (102) begrenzten Vertiefung (107) den Ansaughohlraum (106) des Ansaugkastens (100) in der zusammengebauten Konfiguration zu begrenzen.

4. Ansaugkasten (100) nach Anspruch 3, **dadurch gekennzeichnet, dass** der zweite Teil (103) ein monolithisches Teil ist oder aus zwei Teilen (103a, 103b) ausgebildet ist, die so miteinander verklebt sind, dass sie die Vertiefung (109) des zweiten Teils (103) bilden.

5. Ansaugkasten (100) nach einem der Ansprüche 1 bis 4, **dadurch gekennzeichnet, dass** der erste Teil (102) ein Verbundmaterial umfasst, das eine Matrix und Fasern umfasst, und/oder der zweite Teil (103) ein Verbundmaterial umfasst, das eine Matrix und Fasern umfasst.

6. Ansaugkasten (100) nach einem der Ansprüche 1 bis 5, **dadurch gekennzeichnet, dass** er einen Stoßfänger (110) umfasst, der sich in der zusammengebauten Konfiguration entlang einer seitlichen Kante (111) des ersten Teils (102) und einer seitlichen Kante (112) des zweiten Teils (103) erstreckt, wobei der Stoßfänger (110) ein Band (113) umfasst, das in der zusammengebauten Konfiguration zwischen dem ersten und dem zweiten Teil (102, 103) zusammengedrückt wird.

7. Ansaugkasten (100) nach Anspruch 6, **dadurch gekennzeichnet, dass** die Dichtung (108) durch das Band (113) gebildet wird.

8. Ansaugkasten (100) nach einem der Ansprüche 1 bis 7, **dadurch gekennzeichnet, dass** er Verbindungselemente (114) umfasst, die jeweils einen männlichen Teil (115), der einen Stützkopf (115a) umfasst, und einen weiblichen Teil (116) umfassen, der einen Stützkopf (116a) umfasst, und dass in der zusammengebauten Konfiguration und für jedes Verbindungselement (114) der männliche Teil (115) des Verbindungselements (114) in den weiblichen Teil (116) des Verbindungselements (114) eingerastet ist, so dass der Stützkopf (115a) des männlichen Teils (115) des Verbindungselements (114) und der Stützkopf (116a) des weiblichen Teils (116) des Verbindungselements (114) am Durchführen einer festen Verbindung des ersten Teils (102) und des zweiten Teils (103) miteinander beteiligt sind.

9. Ansaugkasten (100) nach einem der Ansprüche 1 bis 8, **dadurch gekennzeichnet, dass** er einen dritten Teil (117) umfasst, der in der zusammengebauten Konfiguration zwischen dem ersten Teil (102) und dem zweiten Teil (103) angeordnet ist, und dass in der zusammengebauten Konfiguration:
• die Dichtung (108) zwischen dem dritten Teil (117) und dem zweiten Teil (103) zusammengedrückt wird;
• der Ansaugkasten (100) eine zusätzliche Dichtung (108a) umfasst, die zwischen dem dritten Teil (117) und dem ersten Teil (102) zusammengedrückt wird.

10. Ansaugkasten (100) nach einem der Ansprüche 1 bis 9, **dadurch gekennzeichnet, dass** der erste Teil (102) mindestens eine Rippe (118) umfasst, die zur Begrenzung der Vertiefung (107) beiträgt.

11. Ansaugvorrichtung (130) für einen Greifer (1000), wobei die Ansaugvorrichtung (130) jeweils eine Vielzahl von Ansaugkammern und eine Vielzahl von Ansaugkästen (100) nach einem der Ansprüche 1 bis 10 umfasst, wobei der Ansaughohlraum (106) jedes der Ansaugkästen (100) einer der Ansaugkammern entspricht und die Ansaugvorrichtung (130) einen einteiligen Halter (131) umfasst, der die ersten Teile (102) oder die zweiten Teile (103) der Ansaugkästen (100) lokal begrenzt.

12. Greifer (1000), **dadurch gekennzeichnet, dass** er Folgendes umfasst:
• mindestens einen Ansaugkasten (100) nach einem der Ansprüche 1 bis 10;
• mindestens ein Kontaktelement (1001), das dazu bestimmt ist, mit mindestens einem vom Greifer (1000) zu greifenden Objekt (2000) in Kontakt zu kommen; wobei das Kontaktelement (1001) mit einem von dem ersten oder dem zweiten Teil (102, 103) des Ansaugkastens (100) gekoppelt ist.

13. Greifer nach Anspruch 12, **dadurch gekennzeichnet, dass** das Kontaktelement (1001) ein Schaumstoff oder ein Saugnapf ist.

14. Verfahren zum Herstellen eines Anaugkastens (100) nach einem der Ansprüche 1 bis 10, **dadurch gekennzeichnet, dass** es einen Schritt des Bildens des ersten Teils (102) des Ansaugkastens (100), einen Schritt des Bildens des zweiten Teils (103) des Ansaugkastens und einen Montageschritt zum Erreichen der zusammengebauten Konfiguration des Ansaugkastens (100) umfasst, wobei der Schritt des Bildens des ersten Teils (102) einen Schritt des Zusammenbauens zweier Platten umfasst, von denen eine durchbrochen ist, um sich an der Bildung der Vertiefung (107) zu beteiligen.

## Claims

1. A suction box (100) for a gripper (1000), said suction box (100) comprising a first part (102) and a second part (103), one of the first and second parts (102, 103) being intended to be coupled to at least one contact member (1001) of the gripper (1000), said contact member (1001) being intended to come into contact with at least one object (2000) to be gripped by the gripper (1000), and the other of the first and second parts (102, 103) being intended to be in fluid communication with a vacuum generator (1002), the suction box (100) being configured to selectively adopt:
• an assembled configuration in which a mechanical connection is established between the first and second parts (102, 103) so as to respectively define a first wall (104) of the suction box (100) and a second wall (105) of the suction box (100) opposite the first wall (104), each of the first and second walls (104, 105) partially defining, in the assembled configuration, a suction cavity (106) of the suction box (100);
• a disassembled configuration in which said mechanical connection is removed;
suction box (100) wherein:
• the first part (102) defines, in the assembled configuration and in the disassembled configuration, a recess (107);
• the recess (107) contributes to defining, in the assembled configuration, the suction cavity (106) of the suction box (100);
• the suction box (100) comprises a sealing joint (108) interposed, in the assembled configuration, between the first and second parts (102, 103);
**characterized in that** the first part (102) is formed by two pieces (102a, 102b) bonded to each other so as to define the recess (107).

2. The suction box (100) according to claim 1, **characterized in that** the second part (103) is a plate.

3. The suction box (100) according to claim 1, **characterized in that** the second part (103) defines a recess (109) contributing to defining, together with the recess (107) defined by the first part (102), the suction cavity (106) of the suction box (100) in the assembled configuration.

4. The suction box (100) according to claim 3, **characterized in that** the second part (103) is a monolithic piece, or is formed by two pieces (103a, 103b) bonded to each other so as to form the recess (109) of the second part (103).

5. The suction box (100) according to any one of claims 1 to 4, **characterized in that** the first part (102) comprises a composite material comprising a matrix and fibers, and/or the second part (103) comprises a composite material comprising a matrix and fibers.

6. The suction box (100) according to any one of claims 1 to 5, **characterized in that** it comprises a bumper (110) extending, in the assembled configuration, along a lateral edge (111) of the first part (102) and a lateral edge (112) of the second part (103), said bumper (110) comprising a compressed bead (113), in the assembled configuration, between the first and second parts (102, 103).

7. The suction box (100) according to claim 6, **characterized in that** the sealing joint (108) is formed by the bead (113).

8. The suction box (100) according to any one of claims 1 to 7, **characterized in that** it comprises assembly members (114) each comprising a male part (115) comprising a bearing head (115a) and a female part (116) comprising a bearing head (116a), and **in that**, in the assembled configuration and for each assembly member (114), the male part (115) of said assembly member (114) is engaged in the female part (116) of said assembly member (114) such that the bearing head (115a) of the male part (115) of said assembly member (114) and the bearing head (116a) of the female part (116) of said assembly member (114) contribute to implementing a biasing of the first part (102) and the second part (103) towards one another.

9. The suction box (100) according to any one of claims 1 to 8, **characterized in that** it comprises a third part (117) arranged, in the assembled configuration, between the first part (102) and the second part (103), and **in that**, in the assembled configuration:
• the sealing joint (108) is compressed between the third part (117) and the second part (103);
• the suction box (100) comprises an additional sealing joint (108a) compressed between the third part (117) and the first part (102).

10. The suction box (100) according to any one of claims 1 to 9, **characterized in that** the first part (102) comprises at least one rib (118) which contributes to defining the recess (107).

11. The suction device (130) for a gripper (1000), said suction device (130) comprising a plurality of suction chambers and a plurality of suction boxes (100), each according to any one of claims 1 to 10, the suction cavity (106) of each of the suction boxes (100) corresponding to one of said suction chambers, and the suction device (130) comprising a one-piece support (131) locally defining the first parts (102) or the second parts (103) of the suction boxes (100).

12. A gripper (1000), **characterized in that** it comprises:
• at least one suction box (100) according to any one of claims 1 to 10;
• at least one contact member (1001) intended to come into contact with at least one object (2000) to be gripped by the gripper (1000); said contact member (1001) being coupled to one of the first or second parts (102, 103) of said suction box (100).

13. The gripper according to claim 12, **characterized in that** the contact member (1001) is a foam or a suction cup.

14. A method for manufacturing a suction box (100) according to any one of claims 1 to 10, **characterized in that** it comprises a step of forming the first part (102) of the suction box (100), a step of forming the second part (103) of the suction box and an assembly step for obtaining the assembled configuration of the suction box (100), the step of forming the first part (102) comprising a step of assembling two plates, one of which is perforated to contribute to forming the recess (107).
